# FASCICULE DE BREVET EUROPEEN

(11) **EP 3 848 569 B1**
(45) Date de publication et mention de la délivrance du brevet: **13.04.2022**
(21) Numéro de dépôt: 21150390.9
(22) Date de dépôt: 06.01.2021
(51) Int. Cl.: F02C 7/36, F02K 3/06, F16H 1/28, F16H 57/08, H02K 7/116, H02K 7/18, H02K 21/24, H02K 16/00

(54) **RÉDUCTEUR POUR TURBOMACHINE MUNI D'UN GÉNÉRATEUR ÉLECTRIQUE**
REDUKTIONSGETRIEBE FÜR TURBOTRIEBWERK, DAS MIT EINEM STROMGENERATOR AUSGESTATTET IST
REDUCTION GEAR FOR TURBINE ENGINE PROVIDED WITH AN ELECTRIC GENERATOR

(30) Priorité: 09.01.2020 FR 2000156
(43) Date de publication de la demande: 14.07.2021
(73) Titulaire: Safran Transmission Systems, 92700 Colombes (FR)
(72) Inventeur: NIEPCERON, Clément Paul René, 77550 MOISSY-CRAMAYEL (FR); MORELLI, Boris Pierre Marcel, 77550 MOISSY-CRAMAYEL (FR); RAPPAPORT, Florian, 77550 MOISSY-CRAMAYEL (FR); CHARPENTIER, Bernard Guy Antoine, 77550 MOISSY-CRAMAYEL (FR)
(74) Mandataire: Cabinet Beau de Loménie

(56) Documents cités:
- EP-A1- 3 511 557
- EP-A1- 3 569 845
- US-A1- 2010 032 961

## Description

### Domaine Technique

Le présent exposé concerne un réducteur mécanique pour turbomachine muni d'un générateur électrique.

Un tel réducteur mécanique peut notamment être utilisé dans un turboréacteur d'aéronef afin de fournir de l'énergie électrique à l'aéronef. Toutefois, il pourrait tout aussi bien être utilisé dans n'importe quel autre type de turbomachine.

### Technique antérieure

Les nouveaux modèles d'aéronefs, ainsi que l'évolution des usages et des services offerts à bord, tendent à accroitre les besoins de l'aéronef en électricité. En conséquence, afin d'augmenter la puissance électrique ainsi fournie à l'aéronef, il est nécessaire d'augmenter les prélèvements de puissance mécanique sur les turboréacteurs.

Habituellement, ces prélèvements de puissance sont réalisés sur l'arbre haute-pression (HP) du moteur, notamment par l'intermédiaire du boîtier d'entraînement des accessoires.

Néanmoins, de tels prélèvements engendrent de fortes contraintes sur l'opérabilité du moteur, ces dernières réduisant fortement ses performances. De plus, pour chaque moteur, il existe un niveau au-delà duquel il n'est plus possible de prélever de l'énergie mécanique sans compromettre le bon fonctionnement du moteur. EP3511557 décrit, par exemple, un réducteur mécanique pour turbomachine d'aéronef connu.

Il existe donc un réel besoin pour un dispositif permettant de fournir une puissance électrique plus importante et qui soit dépourvu, au moins en partie, des inconvénients inhérents aux configurations connues précitées.

### Exposé de l'invention

Le présent exposé concerne un réducteur mécanique pour turbomachine, en particulier d'aéronef, selon la revendication 1, comprenant un pignon solaire muni d'une denture externe, ayant un axe central formant un axe principal du réducteur, une couronne munie d'une denture interne, coaxiale au pignon solaire, des pignons satellites, engrenés simultanément avec le pignon solaire et la couronne, un porte-satellites, portant des fusées autour desquelles les pignons satellites sont montés en rotation, et au moins un générateur électrique, dans lequel le générateur électrique comprend un premier jeu d'éléments électromagnétiques, disposés sur une première face frontale d'un premier pignon satellite, et un deuxième jeu d'éléments électromagnétiques, disposés sur une première surface frontale du porte-satellites, ladite première surface frontale du porte-satellites s'étendant en vis-à-vis de la première face frontale du pignon solaire de sorte que le premier jeu d'éléments électromagnétiques et le deuxième jeu d'éléments électromagnétiques soient disposés en regard l'un de l'autre, dans lequel l'un parmi les premier et deuxième jeux d'éléments électromagnétiques est un premier jeu de bobines, chaque bobine de ce premier jeu de bobines s'enroulant autour d'une direction parallèle à l'axe principal, et dans lequel l'autre parmi les premier et deuxième jeux d'éléments électromagnétiques est configuré pour induire un courant dans le premier jeu de bobines lorsqu'il est mû d'un mouvement relatif par rapport au premier jeu de bobines.

Ainsi, grâce à un tel réducteur, il est possible de prélever de l'énergie mécanique et de la convertir en énergie électrique de manière simple, efficace et compacte.

En particulier, grâce à cette configuration à flux axial, le générateur électrique peut être facilement intégré aux organes habituels d'un réducteur mécanique, sans devoir lui adjoindre de nouveaux systèmes. Tout d'abord, aucun élément de transmission intermédiaire n'est nécessaire puisque le générateur est inclus dans le réducteur lui-même. Ensuite, les éléments électromagnétiques peuvent être montés directement sur le porte-satellites et les pignons satellites, qui évoluent naturellement en vis-à-vis du porte-satellite, sans qu'il soit nécessaire d'installer des bobines autour du réducteur, ce qui offre une grande compacité au système et laisse donc inchangée, ou pratiquement inchangée, l'intégration du réducteur au sein de la turbomachine. Enfin, grâce à cette position à l'interface entre les pignons satellites et le porte-satellite, le générateur électrique peut bénéficier du dispositif de refroidissement des paliers des pignons satellites sans qu'il soit nécessaire de mettre en place un dispositif de refroidissement spécifique supplémentaire.

Par ailleurs, dans la mesure où ce type de réducteur est le plus souvent connecté à l'arbre basse-pression (BP) de la turbomachine, cette configuration permet de prélever de l'énergie mécanique sur l'arbre BP et non pas sur l'arbre HP, soulageant dès lors ce dernier, ce qui assure une meilleure opérabilité et de meilleures performances pour la turbomachine.

Dans certains modes de réalisation, l'autre parmi les premier et deuxième jeux d'éléments électromagnétiques est un premier jeu d'aimants dont les pôles sont orientés chacun selon une direction parallèle à l'axe principal. De tels aimants génèrent naturellement leur propre champ magnétique sans qu'il soit nécessaire de les activer depuis l'extérieur, ce qui est avantageux dans le cadre d'un pignon en rotation. Toutefois, dans d'autres modes de réalisation, des électroaimants seraient également envisageables.

Dans certains modes de réalisation, le pignon solaire, la couronne et les pignons satellites sont placés dans le même plan. Ceci assure une grande compacité au système.

Dans certains modes de réalisation, la rotation du porte-satellites est bloquée. La réduction se fait donc entre le pignon solaire et la couronne. Dans une telle configuration, le porte-satellites est donc fixe, ce qui facilite le câblage de bobines sur le porte-satellites et la récupération du courant produit par le générateur électrique. En particulier, le porte-satellites peut être fixé au carter (stator) de la turbomachine.

Dans certains modes de réalisation, le premier jeu d'éléments électromagnétiques est ledit premier jeu d'aimants et le deuxième jeu d'éléments électromagnétiques est ledit premier jeu de bobines. Il est en effet plus facile de monter et câbler des bobines sur le porte-satellites.

Selon l'invention, le générateur électrique comprend un troisième jeu d'éléments électromagnétiques, disposés sur une deuxième face frontale du pignon solaire, et un quatrième jeu d'éléments électromagnétiques, disposés sur une deuxième surface frontale du porte-satellites, ladite deuxième surface frontale s'étendant en vis-à-vis de la deuxième face frontale du pignon solaire, dans lequel l'un parmi les troisième et quatrième jeux d'éléments électromagnétiques est un deuxième jeu de bobines, chaque bobine de ce deuxième jeu de bobines s'enroulant autour d'une direction parallèle à l'axe principal, et dans lequel l'autre parmi les troisième et quatrième jeux d'éléments électromagnétiques est configuré pour induire un courant dans le deuxième jeu de bobines lorsqu'il est mû d'un mouvement relatif par rapport au deuxième jeu de bobines. Une telle configuration permet de prélever deux fois plus d'énergie. De plus, elle assure une symétrie de part et d'autre du pignon satellite, ce qui permet d'annuler la résultante des forces électromagnétiques subies par le pignon satellite : on évite ainsi un déplacement du pignon satellite et/ou des sur-contraintes au niveau de ses dentures.

Toujours selon l'invention, l'autre parmi les troisième et quatrième jeux d'éléments électromagnétiques est un deuxième jeu d'aimants, orientés chacun selon une direction parallèle à l'axe principal.

Dans certains modes de réalisation, le troisième jeu d'éléments électromagnétiques est ledit deuxième jeu d'aimants et le deuxième jeu d'éléments électromagnétiques est ledit deuxième jeu de bobines.

Dans certains modes de réalisation, la configuration du deuxième jeu d'aimants est symétrique à la configuration du premier jeu d'aimants par rapport au plan médian du réducteur.

Dans certains modes de réalisation, la configuration du deuxième jeu de bobines est symétrique à la configuration du premier jeu de bobines par rapport au plan médian du réducteur. On assure ainsi un fonctionnement symétrique et compatible des deux unités de génération électrique. On équilibre en outre les efforts s'exerçant sur le pignon satellite.

Dans certains modes de réalisation, au moins un jeu d'aimants, et de préférence chaque jeu d'aimants, comprend une couronne de plusieurs aimants, régulièrement espacés le long d'un même cercle centré sur l'axe de rotation du pignon satellite, tous orientés axialement en alternant le sens de leurs pôles Nord.

Dans certains modes de réalisation, un espace inférieur à 1 cm sépare deux aimants consécutifs au sein de la couronne d'aimants.

Dans certains modes de réalisation, au moins un jeu d'aimants, et de préférence chaque jeu d'aimants, comprend entre 10 et 60 aimants, de préférence entre 12 et 48 aimants.

Dans certains modes de réalisation, les aimants d'au moins un jeu d'aimants, et de préférence chaque jeu d'aimants, sont des aimants permanents, de préférence du type Samarium-Cobalt. En particulier, les aimants du type Samarium-Cobalt possèdent une température de Curie élevée leur permettant de ne pas perdre leur magnétisation à la température de fonctionnement du réducteur.

Dans certains modes de réalisation, les aimants d'au moins un jeu d'aimants, et de préférence chaque jeu d'aimants, possède une température de Curie supérieure à 300 °C.

Dans certains modes de réalisation, au moins un jeu de bobines, et de préférence chaque jeu de bobines, comprend une couronne de plusieurs bobines, régulièrement espacées le long d'un même cercle centré sur l'axe de rotation du pignon satellite, toutes enroulées autour d'une direction axiale.

Dans certains modes de réalisation, un espace inférieur à 1 cm sépare deux bobines consécutives au sein de la couronne de bobines.

Dans certains modes de réalisation, au moins un jeu de bobines, et de préférence chaque jeu de bobines, comprend trois ensembles de bobines, les bobines d'un ensemble donné étant connectées électriquement les unes aux autres au sein d'un même circuit. Ceci permet de produire un courant triphasé.

Dans certains modes de réalisation, les bobines d'un même ensemble de bobines sont montées en série. Ceci permet d'obtenir une tension plus élevée. Toutefois, un montage parallèle ou hybride est également envisageable.

Dans certains modes de réalisation, les premier et deuxième jeux de bobines sont montés en série. Dans d'autres modes de réalisation, ils pourraient être montés en parallèle.

Dans certains modes de réalisation, ladite couronne de bobines comprend un nombre entier de groupes de bobines successifs, chaque groupe se composant, successivement, d'un lot de bobines faisant partie du premier ensemble de bobines, d'un lot de bobines faisant partie du deuxième ensemble de bobines et d'un lot de bobines faisant partie du troisième ensemble de bobines. Ceci permet d'obtenir, virtuellement, des bobines de tailles plus grandes à partir de bobines unitaires plus petites. En particulier, chaque lot peut comprendre deux bobines. Toutefois, dans d'autres modes de réalisation, chaque lot peut comprendre une unique bobine.

Dans certains modes de réalisation, au moins un jeu de bobines, et de préférence chaque jeu de bobines, comprend entre 10 et 60 bobines, de préférence entre 12 et 48 bobines. En particulier, au sein d'une unité de génération électrique donnée, le nombre de bobines peut être égal au nombre d'aimants ; toutefois, cette égalité n'est pas indispensable.

Dans certains modes de réalisation, les bobines d'au moins un jeu de bobines, et de préférence de chaque jeu de bobines, comprennent entre 2 et 20 spires, de préférence entre 2 et 10 spires.

Dans certains modes de réalisation, les bobines d'au moins un jeu de bobines sont enroulées selon un contour circulaire, oblong, ou triangulaire. En particulier, les bobines peuvent s'étendre principalement dans la direction circonférentielle ou bien dans la direction radiale. Ceci permet de s'adapter à la forme et à la disposition des aimants.

Dans certains modes de réalisation, au moins un jeu de bobines, et de préférence chaque jeu de bobines, est monté sur une frette rapportée sur la face frontale considérée du pignon satellite considéré ou sur la surface frontale considérée du porte-satellites. Ceci permet de faciliter l'installation des bobines, ces dernières pouvant être montées dans un premier temps sur la frette puis, dans un deuxième temps, la frette toute entière peut être montée sur le pignon satellite ou le porte-satellites. Ceci facilite également la maintenance du réducteur.

Dans certains modes de réalisation, au moins une bobine, de préférence chaque bobine, dudit au moins un jeu de bobines est enroulée autour d'un noyau porté par la frette. Ce noyau, de préférence ferromagnétique, permet de canaliser le champ magnétique à l'intérieur des bobines, ce qui améliore le transfert d'énergie. Une telle configuration facilite également la mise en place des bobines.

Dans certains modes de réalisation, la distance entre le plan d'au moins un jeu d'aimants et le plan du jeu de bobines en vis-à-vis est comprise entre 1 et 3 mm. Cette plage de distance est de préférence vérifiée pour tous les aimants et toutes les bobines. Cette distance d'entrefer assure en effet un bon transfert d'énergie entre les aimants et les bobines.

Dans certains modes de réalisation, les pignons satellites sont bloqués axialement par rapport au porte-satellites. Un tel blocage axial permet d'assurer un entrefer pratiquement constant entre les aimants et les bobines, ce qui évite des fluctuations non souhaitées dans le courant généré par le générateur électrique.

Dans certains modes de réalisation, les pignons satellites sont bloqués axialement par rapport à au moins un pignon planétaire, c'est-à-dire par rapport au pignon solaire ou à la couronne. Ils peuvent notamment être bloqués par rapport à la couronne, à l'aide d'une denture en chevrons par exemple. Un tel blocage axial permet d'assurer un positionnement pratiquement constant pour les pignons satellites et donc pour le générateur électrique, ce qui évite des fluctuations non souhaitées dans le courant généré par le générateur électrique.

Dans certains modes de réalisation, la puissance générée par le générateur électrique d'un pignon satellite est compris entre 1 et 3kW.

Dans certains modes de réalisation, chaque pignon satellite est équipé d'un tel générateur électrique. Les générateurs électriques de chacun des pignons satellites peuvent être connectés en série ou en parallèle.

Le présent exposé concerne également une turbomachine, comprenant un réducteur selon l'un quelconque des modes de réalisation précédents.

Dans certains modes de réalisation, la turbomachine comprend en outre une soufflante et un arbre basse-pression, connecté à une turbine basse-pression, dans laquelle le réducteur est connecté entre l'arbre basse-pression et la soufflante de manière à entraîner la soufflante à une vitesse inférieure à celle de l'arbre basse-pression.

Dans certains modes de réalisation, l'arbre basse-pression est connecté au pignon solaire du réducteur, la soufflante est connectée à la couronne du réducteur et le porte-satellites est fixé au carter. Le porte-satellites est donc bloqué en rotation.

Dans le présent exposé, les termes « axial », « radial », « tangentiel », « intérieur », « extérieur » et leurs dérivés sont définis par rapport à l'axe de rotation des pignons planétaires du réducteur ; on entend par « plan axial » un plan passant par cet axe de rotation et par « plan radial » un plan perpendiculaire à cet axe de rotation.

Les caractéristiques et avantages précités, ainsi que d'autres, apparaîtront à la lecture de la description détaillée qui suit, d'exemples de réalisation du réducteur et de la turbomachine proposés. Cette description détaillée fait référence aux dessins annexés.

### Brève description des dessins

Les dessins annexés sont schématiques et visent avant tout à illustrer les principes de l'exposé.

Sur ces dessins, d'une figure à l'autre, des éléments (ou parties d'élément) identiques sont repérés par les mêmes signes de référence.
[Fig. 1] La figure 1 est un plan en coupe axiale d'une turbomachine selon l'exposé.
[Fig. 2] La figure 2 représente un schéma de principe d'un exemple de réducteur.
[Fig. 3] La figure 3 est une vue en coupe axiale de cet exemple de réducteur.
[Fig. 4] La figure 4 est une vue en perspective de la coupe de la figure 3.
[Fig. 5] La figure 5 est un agrandissement de la zone V de la figure 4.
[Fig. 6] La figure 6 est une autre vue de détail de l'exemple de réducteur.

### Description des modes de réalisation

Afin de rendre plus concret l'exposé, un exemple de réducteur est décrit en détail ci-après, en référence aux dessins annexés. Il est rappelé que l'invention ne se limite pas à cet exemple.

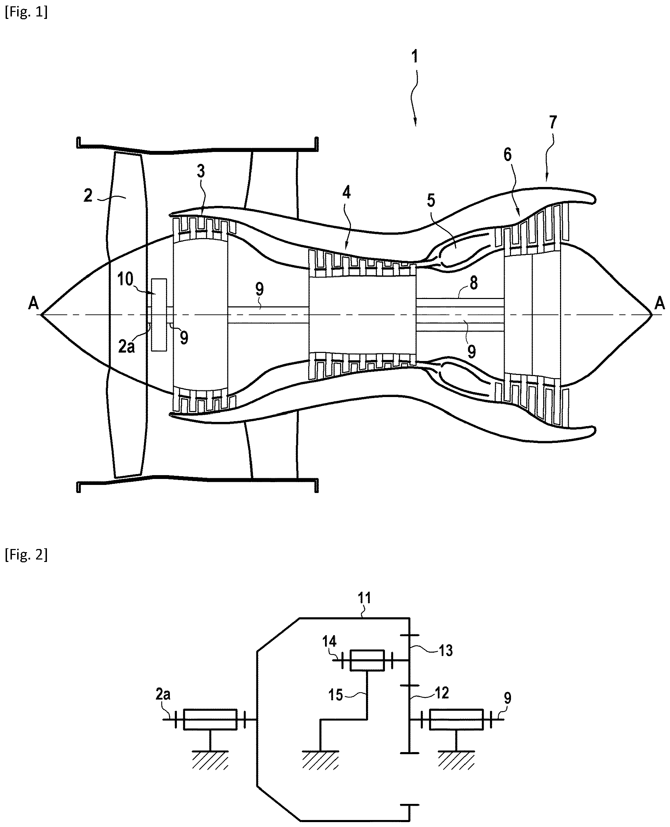

La FIG 1 représente, en coupe selon un plan vertical passant par son axe principal A, un turboréacteur à double flux à réducteur 1 selon l'exposé. Il comporte, d'amont en aval selon la circulation du flux d'air, une soufflante 2, un compresseur basse-pression 3, un compresseur haute-pression 4, une chambre de combustion 5, une turbine haute-pression 6, et une turbine basse-pression 7.

Dans un tel turboréacteur à réducteur 1, la turbine haute-pression 6 entraîne le compresseur haute-pression 4 à l'aide d'un arbre haute-pression 8. La turbine basse-pression 7, également appelée turbine rapide, entraîne quant à elle le compresseur basse-pression 3, également appelé compresseur rapide, à l'aide d'un arbre basse-pression 9. La turbine rapide 7 entraîne également la soufflante 2 par l'intermédiaire d'un réducteur de vitesse 10. De cette manière, la soufflante 2 peut être entraînée à vitesse réduite, ce qui est favorable du point de vue aérodynamique, tandis que le compresseur basse-pression 4 peut être entraîné à vitesse plus importante, ce qui est favorable d'un point de vue thermodynamique.

Comme cela est représenté schématiquement sur la Fig. 2, ce réducteur 10 est un train épicycloïdal muni d'une couronne 11, d'un pignon solaire 12, et de pignons satellites 13. Les pignons satellites 13 sont montés en rotation sur les fusées 14 d'un porte-satellites 15. Dans la configuration présente, le pignon solaire 12 est entraîné par l'arbre basse-pression 9, la couronne 11 entraîne l'arbre 2a de la soufflante 2, et le porte-satellites 15 est fixé.

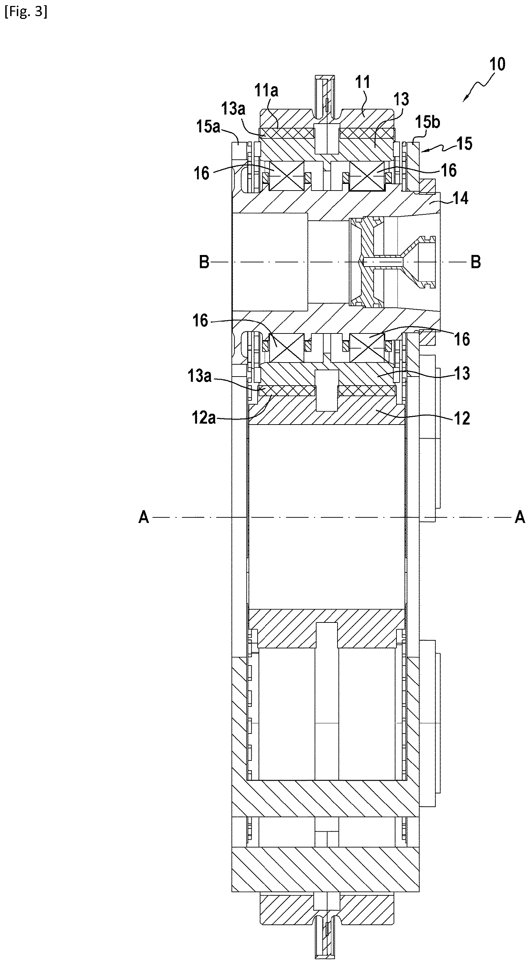

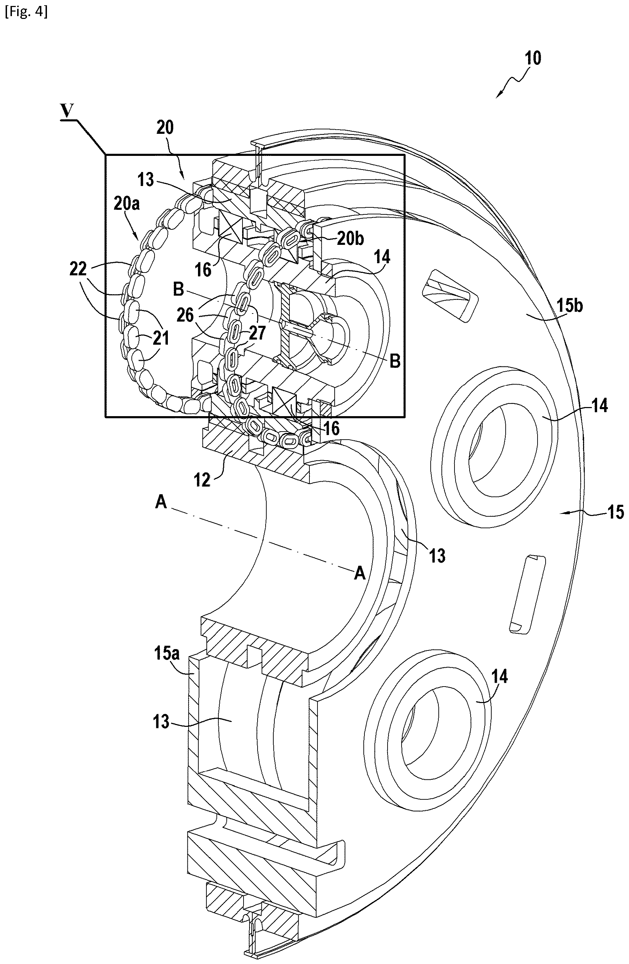

Le réducteur est représenté plus en détails sur les figures 3 et 4. On note ainsi que le porte-satellites 15 comporte une plaque avant 15a et une plaque arrière 15b entre lesquelles s'étendent, à intervalle régulier, cinq fusées 14. Un pignon satellite 13 est monté en rotation sur chacune des fusées 14 par l'intermédiaire d'un roulement 16. Les pignons satellites 13 sont bloqués axialement par rapport au porte-satellites 15.

Chaque pignon satellite 13 possède une denture en chevrons 13a prévue pour engrener sur la denture en chevrons 11a de la couronne 11 ainsi que sur la denture en chevrons 12a du pignon solaire 12. De cette manière, l'ensemble des pignons 11, 12 et 13 du réducteur 10 sont bloqués axialement les uns par rapport aux autres.

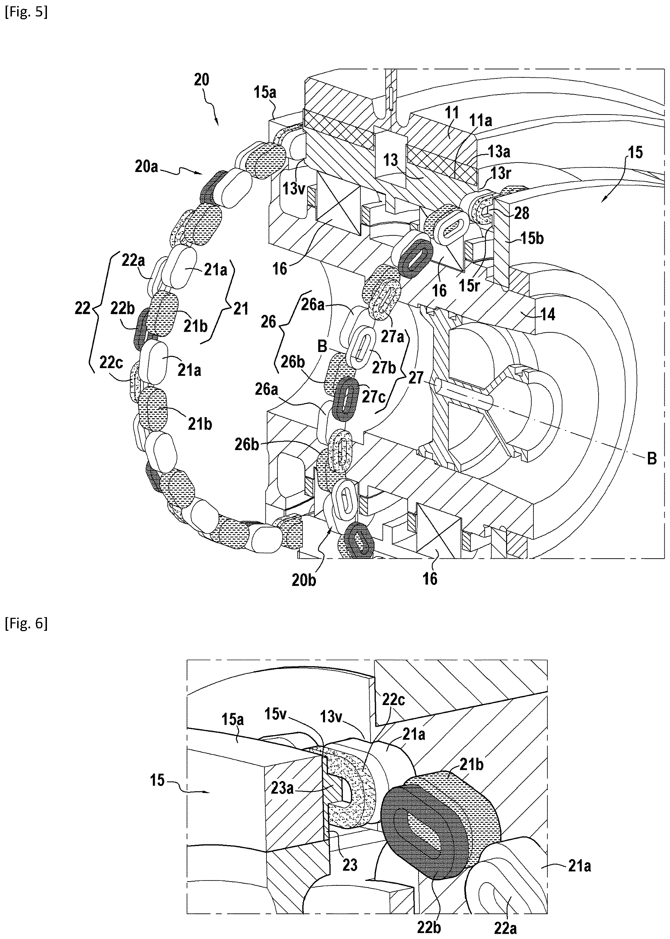

De plus, comme cela est mieux visible sur la Fig. 5, chaque pignon satellite 13 est muni d'un générateur électrique 20. Plus précisément, chaque générateur électrique 20 se compose de deux unités de génération électrique 20a, 20b disposées de manière symétrique de part et d'autre du pignon satellite 13.

La première unité de génération électrique 20a comprend un premier jeu d'aimants permanents 21 et un premier jeu de bobines 22. Les aimants 21, réalisés en alliage de Samarium-Cobalt, sont montés sur la face frontale avant 13v du pignon satellite 13 de manière à aligner la direction de leurs pôles sur l'axe de rotation B du pignon satellite 13, donc selon l'axe principal A du réducteur 10 et de la turbomachine 1. Ces aimants 21, au nombre de 28, sont disposés le long d'une couronne centrée sur l'axe de rotation B du pignon satellite 13 en alternant le sens de leur pôle Nord. Ainsi, les aimants dont le pôle Nord pointe vers l'avant 21a et les aimants dont le pôle Nord pointe vers l'arrière 21b se succèdent en alternance sur toute la circonférence du pignon satellite 13.

Comme cela est mieux visible sur la Fig. 6, le premier jeu de bobines 22 est monté sur une frette annulaire 23 rapportée sur la surface frontale 15v de la plaque avant 15a du porte-satellites 15 faisant face à la face frontale avant 13v du pignon satellite 13. La face frontale avant 13v et la surface frontale avant 15v sont parallèles et s'étendent toutes deux dans des plans radiaux du réducteur : elles sont donc orthogonales à la direction axiale A.

Plus précisément, le premier jeu de bobines 22 comporte trois ensemble de bobines 22a, 22b, 22c connectées en série au sein de chaque ensemble de manière à former trois circuits distincts. Ces bobines 22, au nombre de 27, sont disposées le long d'une couronne centrée sur l'axe de rotation B du pignon satellite 13 en respectant une succession premier ensemble, deuxième ensemble, troisième ensemble. Ainsi, les bobines du premier ensemble 22a, les bobines du deuxième ensemble 22b et les bobines du troisième ensemble 22c se succèdent l'une après l'autre en alternance sur toute la circonférence de la frette 23.

Toutes les bobines 22 s'enroulent autour d'une direction parallèle à l'axe de rotation B du pignon satellite. De plus, elles partagent toutes le même sens d'enroulement. Plus précisément, on note sur la Fig. 6 que la frette 23 présente des protubérances 23a formant des noyaux autour desquels les bobines 22 sont enroulées. La frette 23 est réalisée dans un matériau ferromagnétique, et notamment en alliage fer-cobalt ou en alliage fer-nickel.

Dans le présent exemple, les aimants 21 et les bobines 22 possèdent une forme oblongue s'étendant dans la direction circonférentielle, la forme des bobines 22 étant disposées en regard de la forme des aimants 21. Plus précisément, la couronne formée par les bobines 22 est disposée en regard de la couronne formée par les aimants 21.

La deuxième unité de génération électrique 20b est tout à fait analogue à la première unité de génération électrique 20a si ce n'est qu'elle est disposée de manière symétrique sur le côté arrière du pignon satellite 13.

Ainsi, elle comprend un deuxième jeu d'aimants permanents 26 et un deuxième jeu de bobines 27 analogues aux premiers jeux d'aimants 21 et de bobines 22, respectivement. Les aimants 26 sont montés sur la face frontale arrière 13r du pignon satellite 13 de manière analogue aux aimants 21 du premier jeu. Le deuxième jeu de bobines 27 est lui-aussi monté sur une frette annulaire 28 rapportée pour sa part sur la surface frontale 15r de la plaque arrière 15b du porte-satellites 15 faisant face à la face frontale arrière 13r du pignon satellite 13. La face frontale arrière 13r et la surface frontale arrière 15r sont parallèles et s'étendent toutes deux dans des plans radiaux du réducteur : elles sont donc orthogonales à la direction axiale A

Le deuxième jeu d'aimants 26 comporte donc, en alternance, un premier ensemble d'aimants 26a dont le pôle Nord pointe vers l'avant et un deuxième ensemble d'aimants 26b dont le pôle Nord pointe vers l'arrière. Le deuxième jeu de bobines 27 comporte donc pour sa part, en alternance, un premier ensemble de bobines 27a, formant un premier circuit, un deuxième ensemble de bobines 27b, formant un deuxième circuit, et un troisième ensemble de bobines 27c, formant un troisième circuit.

Un tel générateur électrique 20 peut alors équiper chacun des pignons satellites 13. Dans le présent exemple, le générateur électrique 20 de chaque pignon satellite 13 permet de fournir une puissance électrique de 2kW lors du fonctionnement normal du réducteur 10. Au total, le réducteur est ainsi capable de fournir 10 kW.

Ainsi, lorsque la turbomachine 1 est en fonctionnement, les pignons satellites 13 tournent à grande vitesse autour de leurs fusées 14, le porte-satellites 15 restant pour sa part immobile. En conséquence, les aimants 21, 26 de chaque unité de génération électrique 20a, 20b défilent à grande vitesse devant les bobines 22, 27 disposées en vis-à-vis, ce qui aboutit, en raison de l'alternance du sens des aimants 21, 26, à l'induction d'un courant dans les bobines 22, 27. Dès lors, le câblage des différents ensembles de bobines 22, 27 aboutit à la génération d'un courant triphasé, sur trois terminaux distincts, par chaque unité de génération électrique 20a, 20b. Les deux unités de génération électrique 20a, 20b sont ensuite connectées en série afin d'obtenir une sortie commune pour le générateur électrique 20, puis les générateurs électriques 20 de chacun des pignons satellites 13 sont eux-mêmes montés en série afin d'obtenir une sortie commune pour l'ensemble du réducteur 10.

Dans cet exemple, comme cela a été dit, les aimants 21, 26 et les bobines 22, 27 possèdent une forme oblongue. Toutefois, il va de soi que ces aimants 21, 26 et ces bobines 22, 27 pourraient avoir d'autres formes en fonction des spécificités de l'application visée, notamment en fonction de la géométrie des pignons satellites.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Réducteur mécanique pour turbomachine, en particulier
d'aéronef, comprenant
un pignon solaire (12) muni d'une denture externe (12a), ayant un axe central (A) formant un axe principal du réducteur (10),
une couronne(11) munie d'une denture interne (11a), coaxiale au pignon solaire (12),
des pignons satellites (13), engrenés simultanément avec le pignon solaire (12) et la couronne (11),
un porte-satellites (15), portant des fusées (14) autour desquelles les pignons satellites (13) sont montés en rotation, et
au moins un générateur électrique (20),
dans lequel le générateur électrique (20) comprend un premier jeu d'éléments électromagnétiques (21), disposés sur une première face frontale (13v) d'un premier pignon satellite (13), et un deuxième jeu d'éléments électromagnétiques (22) disposés sur une première surface frontale (15v) du porte-satellites (15), ladite première surface frontale (15v) du porte-satellites (15) s'étendant en vis-à-vis de la première face frontale (13v) du pignon solaire (12) de sorte que le premier jeu d'éléments électromagnétiques (21) et le deuxième jeu d'éléments électromagnétiques (22) soient disposés en regard l'un de l'autre,
dans lequel l'un parmi les premier et deuxième jeux d'éléments électromagnétiques est un premier jeu de bobines (22), chaque bobine (22) de ce premier jeu de bobines s'enroulant autour d'une direction parallèle à l'axe principal (A),
dans lequel l'autre parmi les premier et deuxième jeux d'éléments électromagnétiques est un premier jeu d'aimants (21) dont les pôles sont orientés chacun selon une direction parallèle à l'axe principal (A) de manière à induire un courant dans le premier jeu de bobines (22) lorsqu'il est mû d'un mouvement relatif par rapport au premier jeu de bobines (22),
et **caractérisé en ce que** le générateur électrique (20) comprend un troisième jeu d'éléments électromagnétiques (26), disposés sur une deuxième face frontale (13r) du premier pignon satellite (13), et un quatrième jeu d'éléments électromagnétiques (27) disposés sur une deuxième surface frontale (15r) du porte-satellites (13), ladite deuxième surface frontale (15r) s'étendant en vis-à-vis de la deuxième face frontale (13r) du premier pignon satellite (13), dans lequel l'un parmi les troisième et quatrième jeux d'éléments électromagnétiques est un deuxième jeu de bobines (27), chaque bobine (27) de ce deuxième jeu de bobines s'enroulant autour d'une direction parallèle à l'axe principal (A), et
dans lequel l'autre parmi les troisième et quatrième jeux d'éléments électromagnétiques est un deuxième jeu d'aimants (26) orientés chacun selon une direction parallèle à l'axe principal (A) de manière à induire un courant dans le deuxième jeu de bobines (27) lorsqu'il est mû d'un mouvement relatif par rapport au deuxième jeu de bobines (27).

2. Réducteur mécanique selon la revendication 1 ou 2, dans lequel la rotation du porte-satellites (15) est bloquée.

3. Réducteur mécanique selon la revendication 2 ou la revendication 3 incluant la revendication 2, dans lequel le premier jeu d'éléments électromagnétiques est ledit premier jeu d'aimants (21) et le deuxième jeu d'éléments électromagnétiques est ledit premier jeu de bobines (22).

4. Réducteur mécanique selon l'une quelconque des revendications 1 à 3, dans lequel la configuration du deuxième jeu d'aimants (26) est symétrique à la configuration du premier jeu d'aimants (21) par rapport au plan médian du réducteur, et
dans lequel la configuration du deuxième jeu de bobines (27) est symétrique à la configuration du premier jeu de bobines (22) par rapport au plan médian du réducteur.

5. Réducteur mécanique selon l'une quelconque des revendications 1 à 4, dans lequel au moins un jeu d'aimants (21) comprend une couronne de plusieurs aimants (21a, 21b), régulièrement espacés le long d'un même cercle centré sur l'axe de rotation (B) du pignon satellite (13), tous orientés axialement en alternant le sens de leurs pôles Nord,
dans lequel au moins un jeu de bobines (22) comprend une couronne de plusieurs bobines (22a, 22b, 22c), régulièrement espacées le long d'un même cercle centré sur l'axe de rotation (B) du pignon satellite (13), toutes enroulées autour d'une direction axiale, et
dans lequel au moins un jeu de bobines (22) comprend trois ensembles de bobines (22a, 22b, 22c), les bobines (22a, 22b, 22c) d'un ensemble donné étant connectées électriquement les unes aux autres au sein d'un même circuit.

6. Réducteur mécanique selon l'une quelconque des revendications 1 à 5, dans lequel au moins un jeu de bobines (22) est monté sur une frette (23) rapportée sur la face frontale considérée du pignon satellite considéré ou sur la surface frontale considérée (15v) du porte-satellites (15).

7. Réducteur mécanique selon la revendication 6, dans lequel au moins une bobine (22), de préférence chaque bobine (22), dudit au moins un jeu de bobines (22) est enroulée autour d'un noyau (23a) porté par la frette (23).

8. Réducteur mécanique selon l'une quelconque des revendications 1 à 7, dans lequel la distance entre le plan d'au moins un jeu d'aimants (21) et le plan du jeu de bobines (22) en vis-à-vis est comprise entre 1 et 3 mm.

9. Réducteur mécanique selon l'une quelconque des revendications 1 à 8, dans lequel les pignons satellites (13) sont bloqués axialement par rapport au porte-satellites (15).

10. Turbomachine, comprenant un réducteur (10) selon l'une quelconque des revendications 1 à 9.

11. Turbomachine selon la revendication 10, comprenant en
outre
un carter
une soufflante (2), et
un arbre basse-pression (9), connecté à une turbine basse-pression (7),
dans laquelle le réducteur (10) est connecté entre l'arbre basse-pression (9) et la soufflante (2) de manière à entraîner la soufflante (2) à une vitesse inférieure à celle de l'arbre basse-pression (9), et
dans laquelle l'arbre basse-pression (9) est connecté au pignon solaire (12) du réducteur (10), la soufflante (2) est connectée à la couronne (11) du réducteur (10) et le porte-satellites (15) est fixé au carter.

## Patentansprüche

1. Mechanisches Reduktionsgetriebe für Turbotriebwerk, insbesondere eines Luftfahrzeugs, das umfasst:
ein Sonnenrad (12), das mit einer Außenzahnung (12a) versehen ist und eine Mittelachse (A) aufweist, die eine Hauptachse des Reduktionsgetriebes (10) bildet,
einen Kranz (11), der mit einer Innenzahnung (11a) versehen ist und koaxial zum Sonnenrad (12) ist,
Planetenräder (13), die gleichzeitig mit dem Sonnenrad (12) und dem Kranz (11) ineinandergreifen,
einen Planetenradträger (15), der Drehscheiben (14) trägt, um die die Planetenräder (13) drehbar gelagert sind, und
mindestens einen Stromgenerator (20),
wobei der Stromgenerator (20) einen ersten Satz von elektromagnetischen Elementen (21), die auf einer ersten Stirnfläche (13v) eines ersten Planetenrades (13) angeordnet sind, und einen zweiten Satz von elektromagnetischen Elementen (22) umfasst, die auf einer ersten Stirnoberfläche (15v) des Planetenradträgers (15) angeordnet sind, wobei die erste Stirnoberfläche (15v) des Planetenradträgers (15) sich derart gegenüber der ersten Stirnseite (13v) des Sonnenrades (12) erstreckt, dass der erste Satz von elektromagnetischen Elementen (21) und der zweite Satz von elektromagnetischen Elementen (22) einander gegenüberstehend angeordnet sind,
wobei einer von dem ersten und dem zweiten Satz von elektromagnetischen Elementen ein erster Satz von Wicklungen (22) ist, wobei jede Wicklung (22) dieses ersten Satzes von Wicklungen um eine Richtung gewickelt ist, die parallel zur Hauptachse (A) ist,
wobei der andere von dem ersten und dem zweiten Satz von elektromagnetischen Elementen ein erster Satz von Magneten (21) ist, deren Pole jeweils derart entlang einer Richtung parallel zur Hauptachse (A) ausgerichtet sind, dass ein Strom in dem ersten Satz von Wicklungen (22) induziert wird, wenn er mit einer relativen Bewegung in Bezug auf den ersten Satz von Wicklungen (22) bewegt wird,
und **dadurch gekennzeichnet, dass** der Stromgenerator (20) einen dritten Satz von elektromagnetischen Elementen (26), die auf einer zweiten Stirnseite (13r) des ersten Planetenrades (13) angeordnet sind, und einen vierten Satz von elektromagnetischen Elementen (27) umfasst, die auf einer zweiten Stirnoberfläche (15r) des Planetenradträgers (13) angeordnet sind, wobei die zweite Stirnoberfläche (15r) sich gegenüber der zweiten Stirnseite (13r) des ersten Planetenrades (13) erstreckt, wobei eines von dem dritten und dem vierten Satz von elektromagnetischen Elementen ein zweiter Satz von Wicklungen (27) ist, wobei jede Wicklung (27) von diesem zweiten Satz von Wicklungen um eine Richtung parallel zur Hauptachse (A) gewickelt ist, und
wobei der andere von dem dritten und dem vierten Satz von elektromagnetischen Elementen ein zweiter Satz von Magneten (26) ist, die jeweils entlang einer Richtung parallel zur Hauptachse (A) ausgerichtet sind, derart dass ein Strom in dem zweiten Satz von Wicklungen (27) induziert wird, wenn er mit einer relativen Bewegung in Bezug auf den zweiten Satz von Wicklungen (27) bewegt wird.

2. Mechanisches Reduktionsgetriebe nach Anspruch 1 oder 2, wobei die Drehung des Planetenradträgers (15) blockiert ist.

3. Mechanisches Reduktionsgetriebe nach Anspruch 2 oder Anspruch 3, der Anspruch 2 umfasst, wobei der erste Satz von elektromagnetischen Elementen der erste Satz von Magneten (21) ist und der zweite Satz von elektromagnetischen Elementen der erste Satz von Wicklungen (22) ist.

4. Mechanisches Reduktionsgetriebe nach einem der Ansprüche 1 bis 3, wobei die Ausgestaltung des zweiten Satzes von Magneten (26) in Bezug auf die Mittelebene des Reduktionsgetriebes symmetrisch zur Ausgestaltung des ersten Satzes von Magneten (21) ist, und
wobei die Ausgestaltung des zweiten Satzes von Wicklungen (27) in Bezug auf die Mittelebene des Reduktionsgetriebes symmetrisch zur Ausgestaltung des ersten Satzes von Wicklungen (22) ist.

5. Mechanisches Reduktionsgetriebe nach einem der Ansprüche 1 bis 4, wobei der mindestens eine Satz von Magneten (21) einen Kranz mit mehreren Magneten (21a, 21b) umfasst, die gleichmäßig entlang eines selben Kreises beabstandet sind, der auf die Drehachse (B) des Planetenrades (13) zentriert ist, und die alle axial unter Abwechslung der Richtung ihrer Nordpole ausgerichtet sind, wobei der mindestens eine Satz von Wicklungen (22) einen Kranz mit mehreren Wicklungen (22a, 22b, 22c) umfasst, die gleichmäßig entlang eines selben Kreises beabstandet sind, der auf die Drehachse (B) des Planetenrades (13) zentriert ist, wobei alle um eine axiale Richtung gewickelt sind, und
wobei mindestens ein Satz von Wicklungen (22) drei Mengen von Wicklungen (22a, 22b, 22c) umfasst, wobei die Wicklungen (22a, 22b, 22c) einer gegebenen Menge innerhalb eines selben Kreises elektrisch miteinander verbunden sind.

6. Mechanisches Reduktionsgetriebe nach einem der Ansprüche 1 bis 5, wobei der mindestens eine Satz von Wicklungen (22) auf einer an der betrachteten Stirnseite des betrachteten Planetenrades angesetzten Bandage (23) oder auf der betrachteten Stirnoberfläche (15v) des Planetenradträgers (15) montiert ist.

7. Mechanisches Reduktionsgetriebe nach Anspruch 6, wobei mindestens eine Wicklung (22), vorzugsweise jede Wicklung (22), des mindestens einen Satzes von Wicklungen (22) um einen Kern (23a) gewickelt ist, der von der Bandage (23) getragen wird.

8. Mechanisches Reduktionsgetriebe nach einem der Ansprüche 1 bis 7, wobei der Abstand zwischen der Ebene von mindestens einem Satz von Magneten (21) und der Ebene des Satzes von gegenüberliegenden Wicklungen (22) zwischen 1 und 3 mm beträgt.

9. Mechanisches Reduktionsgetriebe nach einem der Ansprüche 1 bis 8, wobei die Planetenräder (13) axial in Bezug auf die Planetenradträger (15) blockiert sind.

10. Turbotriebwerk, das ein Reduktionsgetriebe (10) nach einem der Ansprüche 1 bis 9 umfasst.

11. Turbomaschine nach Anspruch 10, die ferner umfasst:
ein Gehäuse,
ein Gebläse (2), und
eine Niederdruckwelle (9), die mit einer Niederdruckturbine (7) verbunden ist,
wobei das Reduktionsgetriebe (10) derart zwischen der Niederdruckwelle (9) und dem Gebläse (2) verbunden ist, dass das Gebläse (2) mit einer Drehzahl angetrieben wird, die niedriger als diejenige der Niederdruckwelle (9) ist, und
wobei die Niederdruckwelle (9) mit dem Sonnenrad (12) des Reduktionsgetriebes (10) verbunden ist, das Gebläse (2) mit dem Kranz (11) des Reduktionsgetriebes (10) verbunden ist und der Planetenradträger (15) an dem Gehäuse befestigt ist.

## Claims

1. A mechanical reduction gear for a turbomachine, in particular for an aircraft, comprising
a sun gear (12) equipped with external teeth (12a), having a central axis (A) forming a main axis of the reduction gear (10),
a ring gear (11) equipped with internal teeth (11a), coaxial with the sun gear (12),
planet gears (13), simultaneously meshed with the sun gear (12) and the ring gear (11),
a planet carrier (15), carrying spindles (14) around which the planet gears (13) are mounted in rotation, and
at least one electric generator (20),
wherein the electric generator (20) comprises a first set of electromagnetic elements (21), disposed on a first frontal face (13v) of a first planet gear (13), and a second set of electromagnetic elements (22) disposed on a first frontal surface (15v) of the planet carrier (15), said first frontal surface (15v) of the planet carrier (15) extending facing the first frontal face (13v) of the sun gear (12) so that the first set of electromagnetic elements (21) and the second set of electromagnetic elements (22) are disposed facing one another, wherein one among the first and second set of electromagnetic elements is a first set of coils (22), each coil (22) of this first set of coils being wound around a direction parallel to the main axis (A),
wherein the other among the first and second set of electromagnetic elements is a first set of magnets (21) each of the poles of which is oriented in a direction parallel to the main axis (A) so as to induce a current in the first set of coils (22) when it is driven with a relative movement with respect to the first set of coils (22),
and **characterized in that** the electric generator (20) comprises a third set of electromagnetic elements (26), disposed on a second frontal face (13r) of the first planet gear (13), and a fourth set of electromagnetic elements (27) disposed on a second frontal surface (15r) of the planet carrier (13), said second frontal surface (15r) extending facing the second frontal face (13r) of the first planet gear (13),
wherein one among the third and fourth set of electromagnetic elements is a second set of coils (27), each coil (27) of this second set of coils being wound around a direction parallel to the main axis (A), and
wherein the other among the third and fourth set of electromagnetic elements is a second set of magnets (26) each oriented in a direction parallel to the main axis (A) so as to induce a current in the second set of coils (27) when it is driven with a relative movement with respect to the second set of coils (27).

2. The mechanical reduction gear according to claim 1 or 2, wherein the rotation of the planet carrier (15) is blocked.

3. The mechanical reduction gear according to claim 2 or claim 3 including claim 2, wherein the first set of electromagnetic elements is said first set of magnets (21) and the second set of electromagnetic elements is said first set of coils (22).

4. The mechanical reduction gear according to anyone of claims 1 to 3,
wherein the configuration of the second set of magnets (26) is symmetrical with the configuration of the first set of magnets (21) with respect to the median plane of the reduction gear, and
wherein the configuration of the second set of coils (27) is symmetrical with the configuration of the first set of coils (22) with respect to the median plane of the reduction gear.

5. The mechanical reduction gear according to any one of claims 1 to 4,
wherein at least one set of magnets (21) comprises a ring of several magnets (21a, 21b), regularly spaced along the same circle centered on the axis of rotation (B) of the planet gear (13), all oriented axially while alternating the direction of their North poles,
wherein at least one set of coils (22) comprises a ring of several coils (22a, 22b, 22c), regularly spaced along the same circle centered on the axis of rotation (B) of the planet gear (13), all wound around an axial direction, and wherein at least one set of coils (22) comprises three coil assemblies (22a, 22b, 22c), the coils of one given assembly (22a, 22b, 22c) being connected electrically to one another within the same circuit.

6. The mechanical reduction gear according to any one of claims 1 to 5, wherein at least one set of coils (22) is mounted on a collar (23) applied to the particular frontal face of the particular planet gear or to the particular frontal surface (15v) of the planet carrier (15).

7. The mechanical reduction gear according to claim 6, wherein at least one coil (22), preferably each coil (22), of said at least one set of coils (22) is wound around a core (23a) carried by the collar (23).

8. The mechanical reduction gear according to any one of claims 1 to 7, wherein the distance between the plane of at least one set of magnets (21) and the plane of the facing set of coils (22) is comprises between 1 and 3 mm.

9. The mechanical reduction gear according to any one of claims 1 to 8, wherein the planet gears (13) are blocked axially with respect to the planet carrier (15).

10. A turbomachine, comprising a reduction gear (10) according to any one of claims 1 to 9.

11. The turbomachine according to claim 10, further comprising
a casing
a fan (2), and
a low-pressure shaft (9), connected to a low-pressure turbine (7),
wherein the reduction gear (10) is connected between the low-pressure shaft (9) and the fan (2) so as to drive the fan (2) at a lower speed than that of the low-pressure shaft (9), and
wherein the low-pressure shaft (9) is connected to the sun gear (12) of the reduction gear (10), the fan (2) is connected to the ring gear (11) of the reduction gear (10) and the planet carrier (15) is fastened to the casing.
